# EUROPEAN PATENT SPECIFICATION

(11) **EP 3 636 534 B1**
(45) Date of publication and mention of the grant of the patent: **22.12.2021**
(21) Application number: 19193219.3
(22) Date of filing: 23.08.2019
(51) Int. Cl.: B62K 19/28, B62K 11/04, B62K 19/20, B62K 19/06, B62J 35/00

(54) **STRADDLED VEHICLE**
GRÄTSCHSITZFAHRZEUG
VÉHICULE À ENFOURCHER

(30) Priority: 11.10.2018 JP 2018192757
(43) Date of publication of application: 15.04.2020
(73) Proprietor: YAMAHA HATSUDOKI KABUSHIKI KAISHA, Iwata-shi, Shizuoka 438-8501 (JP)
(72) Inventor: KAWAGUCHI, Tsutomu, Iwata-shi, Shizuoka 438-8501 (JP)
(74) Representative: Grünecker Patent- und Rechtsanwälte PartG mbB

(56) References cited:
- EP-A1- 1 990 264
- JP-U- H0 265 687
- JP-U- H04 116 298

## Description

The present invention relates to a straddled vehicle according to the preamble of independent claim 1. Such a straddled vehicle can be taken from the prior art document EP 1 990 264 A1. Other straddled vehicles are known from JP H02 65687 U and JP H04 116298 U.

Some straddled vehicles are provided with a vehicle body frame including a head pipe, a down frame, a first side frame, and a second side frame (see JP 2010-215214A). The down frame extends downward from the head pipe. The first side frame extends from the down frame to one of left and right and rearward. The second side frame extends from the down frame to the other left and right and rearward. The first side frame and the second side frame are formed of integrally formed pipe-like member. The pipe-like member is disposed to penetrate the down frame, and is fixed to the down frame by welding.

In detail, the pipe-like member is fixed to the down frame by the following steps. First, the upper portion of the pipe-like member is aligned to the lower end of the down frame. The lower end of the down frame is provided with a recess, and the pipe-like member is disposed in the recess. Next, a separate lower frame member is attached from below the pipe-like member and the down frame, so that the pipe-like member is sandwiched between the down frame and the lower frame member. In this state, the down frame, the pipe-like member and the lower frame member are fixed to each other by welding. Thereby, as described above, the pipe-like member is disposed so as to penetrate the down frame, and is fixed to the down frame.

As described above, in the structure in which the pipe-like member is disposed to penetrate the down frame, the work of fixing the pipe-like member to the down frame is difficult, and the manufacturing cost is increased. Also, in order to fix the pipe-like member to the down frame, the layout of the pipe-like member or other parts around the pipe is limited. Therefore, there is also a problem that the degree of freedom in design is low.

It has been devised a structure in which the first side frame and the second side frame are separate parts and fixed to the down frame. According to this structure, since the first side frame and the second side frame are separate parts, the work of fixing to the down frame is facilitated. In addition, the degree of freedom in design can be improved by relaxing the restriction of the layout of the first side frame and the second side frame.

However, in the case where the first side frame and the second side frame are separate parts, the down frame is susceptible to the influence of the force received by the first side frame and/or the second side frame. For example, the first side frame and the second side frame receive a force in a direction laterally outward and thereby the down frame receives a force that is pulled laterally. As a result, the down frame tends to be deformed, and the rigidity of the vehicle body frame may be reduced. On the other hand, although the decrease in the rigidity of the vehicle body frame can be suppressed by thickening the tube wall of the down frame, in this case, the body frame becomes larger.

It is an object of the present invention to provide a straddled vehicle that can secure rigidity of a vehicle body frame while suppressing an increase in size of the vehicle body frame in a straddled vehicle, and to improve design freedom while suppressing increase in manufacturing cost. According to the present invention said object is solved by a straddled vehicle having the features of independent claim 1. Preferred embodiments are laid down in the dependent claims.

A straddled vehicle according to the invention includes a head pipe, a down frame, a first side frame, a second side frame, and a lid member. The down frame extends downwardly from the head pipe and has a tubular shape. The first side frame extends from the down frame to one of left and right and rearward. The second side frame extends from the down frame to the other left and right and rearward. The lid member is disposed in the down frame and fixed to the down frame. The first side frame and the second side frame are separate from each other. The first side frame includes a first connection end connected to the down frame. The second side frame includes a second connection end connected to the down frame. In a vehicle side view , the lid member overlaps the first connection end.

In the straddled vehicle according to the invention, the first side frame and the second side frame are separate from each other. Therefore, the degree of freedom in design can be improved while suppressing an increase in manufacturing cost. In addition, the lid member overlaps the first connection end in the vehicle side view . Therefore, the deformation of the down frame due to the force received by the first side frame is suppressed by the lid member. Thereby, the rigidity of the vehicle body frame can be improved. Furthermore, since the lid member is disposed in the down frame, the enlargement of the vehicle body frame can be suppressed.

The lid member may overlap with the first connection end and the second connection end in the vehicle side view. In this case, the deformation of the down frame by the force received by the first side frame and the deformation of the down frame by the force received by the second side frame are suppressed by the lid member. Thereby, the rigidity of the vehicle body frame can be further improved.

The lid member may be disposed between the first connection end and the second connection end in the vehicle width direction. In this case, the deformation of the down frame by the force received by the first side frame and the deformation of the down frame by the force received by the second side frame are suppressed by the lid member. Thereby, the rigidity of the vehicle body frame can be further improved.

The lid member may be disposed between an upper end and an lower end of the first connection end in a central axial direction of the down frame. In this case, the deformation of the down frame due to the force received by the first side frame is suppressed by the lid member. Thereby, the rigidity of the vehicle body frame can be improved.

The lid member may be disposed within a predetermined distance from the center between the upper end and the lower end of the first connection end in a central axial direction respectively upward and downward. The predetermined distance may be one third or less of a distance between the upper end and the lower end of the first connection end. In this case, the deformation of the down frame due to the force received by the first side frame is more effectively suppressed by the lid member. Thereby, the rigidity of the vehicle body frame can be improved.

The lid member may be fixed to the down frame by welding. At least a portion of the weld bead securing the lid member to the down frame may be located between the upper end and the lower end of the first connection end. In this case, the deformation of the down frame due to the force received by the first side frame is more effectively suppressed by the lid member. Thereby, the rigidity of the vehicle body frame can be improved.

The weld bead may be located between a lower end of the down frame and the lid member. In this case, since the lid member can be welded from the lower end of the down frame, manufacture is easy.

In the vehicle side view , the first connection end may overlap at least a portion of the second connection end. In this case, a large space can be secured behind the left and right side frames.

The first connection end and the second connection end may be arranged concentrically in a vehicle side view . In this case, a large space can be secured behind the left and right side frames.

The straddled vehicle may further include a fuel tank. At least a portion of the fuel tank may be disposed between the first side frame and the second side frame. In this case, a large space for disposing the fuel tank can be secured behind the left and right side frames.

### BRIEF DESCRIPTION OF THE DRAWINGS

FIG. 1 is a side view of a straddled vehicle according to an embodiment.
FIG. 2 is a plan view of a vehicle body frame.
FIG. 3 is a perspective view of the vehicle body frame and a fuel tank.
FIG. 4 is a side view of the vehicle body frame and the fuel tank.
FIG. 5 is an enlarged front view of the vehicle body frame.
FIG. 6 is an enlarged bottom view of the vehicle body frame and the fuel tank.
FIG. 7 is an enlarged perspective view of the vehicle body frame as viewed from below.
FIG. 8 is a perspective view of the lid member.
FIG. 9 is an enlarged side view showing a lower portion of the down frame.

### DETAILED DESCRIPTION OF THE PREFERRED EMBODIMENTS

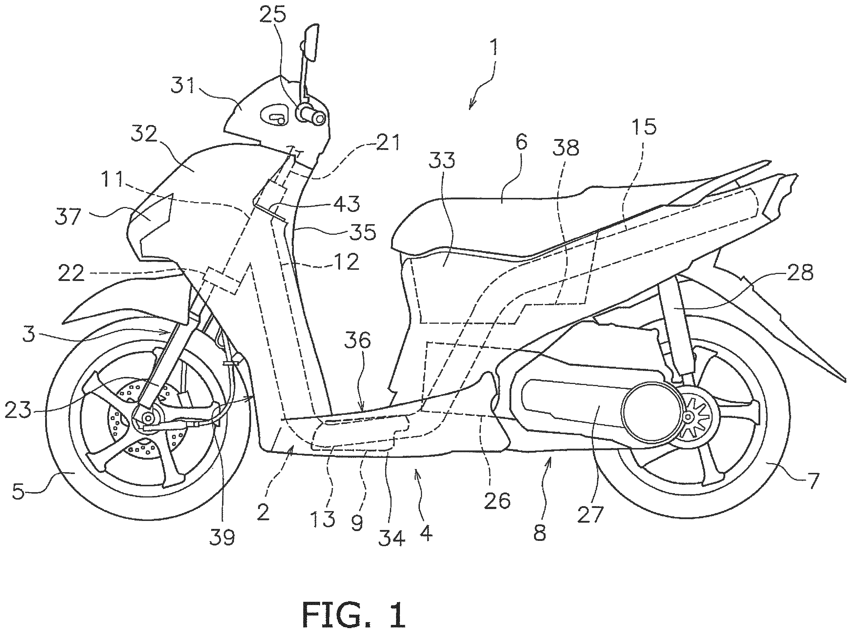

Hereinafter, a straddled vehicle 1 according to an embodiment will be described with reference to the drawings. FIG. 1 is a side view of the straddled vehicle 1. The straddled vehicle 1 according to the present embodiment is a scooter type vehicle. As shown in FIG. 1, the straddled vehicle 1 includes a vehicle body frame 2, a steering device 3, a vehicle body cover 4, a front wheel 5, a seat 6, a rear wheel 7, a power unit 8 and a fuel tank 9.

In the present embodiment, the front, rear, upper and lower, left-right directions of the straddled vehicle 1 are front, rear, upper and lower, left-right directions as viewed from a rider of the straddled vehicle 1. Further, the front-rear direction does not only indicate a direction parallel to the front-rear direction of the straddled vehicle 1, but includes a direction inclined within a range of ± 45 degrees with respect to the front-rear direction of the straddled vehicle 1. In other words, a direction closer to the front-rear direction than the left-right direction and the up-down direction is included in the front-rear direction.

Similarly, the up-down direction includes a direction inclined within a range of ± 45 degrees with respect to the up-down direction of the straddled vehicle 1. In other words, the direction closer to the up-down direction than the front-rear direction and the left-right direction is included in the up-down direction. Furthermore, the left-right direction includes a direction inclined within a range of ± 45 degrees with respect to the left-right direction of the straddled vehicle 1. In other words, the direction closer to the left-right direction than the front-rear direction and the up-down direction is included in the left-right direction.

In the present specification, the term "connection" includes not only direct connection but also indirect connection. In addition, "connection" does not necessarily mean that separate members are fixed to each other, but also includes that a plurality of portions are continuous in an integral member.

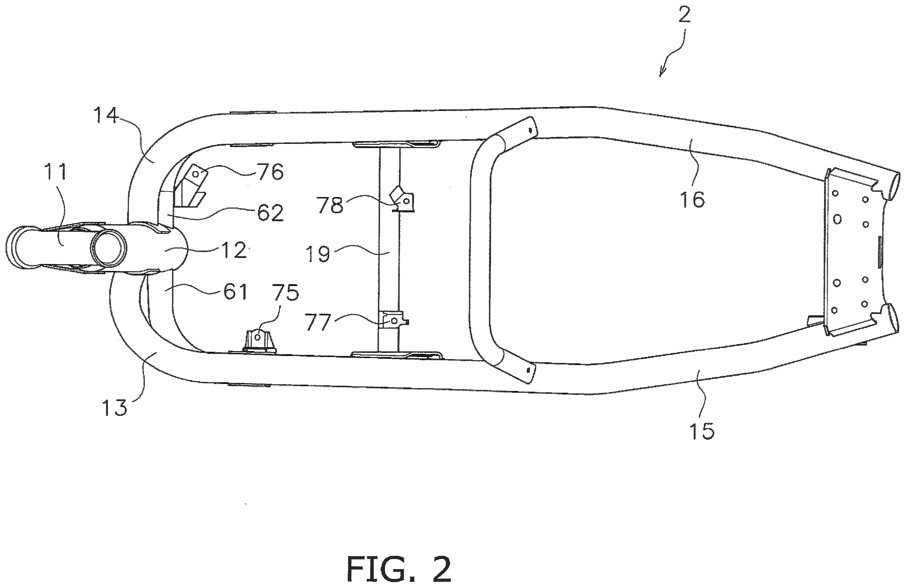

FIG. 2 is a plan view of the vehicle body frame 2. As shown in FIGS. 1 and 2, the vehicle body frame 2 includes a head pipe 11, a down frame 12, a first lower frame 13, a second lower frame 14, a first rear frame 15, and a second rear frame 16. In a vehicle side view, the head pipe 11 is inclined rearward and upward. The down frame 12 extends downward from the head pipe 11. The down frame 12 has a tubular shape.

The first lower frame 13 and the second lower frame 14 are connected to a lower portion of the down frame 12. The first lower frame 13 extends leftward and rearward from the down frame 12. The second lower frame 14 extends rightward and rearward from the down frame 12. The first rear frame 15 extends rearward and upward from the first lower frame 13. The second rear frame 16 extends rearward and upward from the second lower frame 14. The first lower frame 13, the second lower frame 14, the first rear frame 15, and the second rear frame 16 each have a tubular shape.

The steering device 3 is rotatably supported by the head pipe 11. The steering device 3 includes a steering shaft 21, an under bracket 22, and left and right suspensions 23. Only the left suspension 23 is shown in FIG. 1. The steering shaft 21 is inserted into the head pipe 11. An upper portion of the steering shaft 21 is connected to the handle 25. The steering shaft 21 is rotatably supported by the head pipe 11 in the left-right direction. The under bracket 22 is connected to a lower portion of the steering shaft 21. The upper ends of the left and right suspensions 23 are connected to the under bracket 22. The front wheel 5 is rotatably supported by the left and right suspensions 23.

The vehicle body cover 4 includes a handle cover 31, a front cover 32, a rear cover 33, a lower cover 34, a leg shield 35, and a mud cover 39. The handle cover 31 covers the front and rear of the handle 25. A meter panel including a speedometer and the like is attached to a top surface of the handle cover 31.

The front cover 32 is disposed in front of the head pipe 11 and the down frame 12. A headlight 37 is disposed on the front cover 32. The leg shield 35 is disposed behind the front cover 32. The leg shield 35 is disposed behind the head pipe 11 and the down frame 12. The mud cover 39 is disposed behind the front wheel 5 and in front of the leg shield 35. The rear cover 33 covers the first rear frame 15 and the second rear frame 16. The rear cover 33 is disposed below the seat 6.

The seat 6 is disposed rearward of the head pipe 11. The seat 6 is disposed above the first rear frame 15 and the second rear frame 16. A storage box 38 is disposed in the rear cover 33. The storage box 38 is disposed below the seat 6. The lower cover 34 is disposed between the front cover 32 and the rear cover 33. The lower cover 34 covers the first lower frame 13 and the second lower frame 14. The upper surface of the lower cover 34 includes a footboard 36.

The footboard 36 is disposed downward and forward of the seat 6. The footboard 36 is disposed above the first lower frame 13 and the second lower frame 14. That is, the footboard 36 overlaps the first lower frame 13 and the second lower frame 14 in a plan view of the vehicle. The footboard 36 is disposed between the leg shield 35 and the rear cover 33 in the front-rear direction of the vehicle. The fuel tank 9 is disposed below the footboard 36. That is, the fuel tank 9 overlaps with the footboard 36 in the plan view of the vehicle.

The footboard 36 is provided for the rider to place his or her foot. The footboard 36 has a flat shape in the vehicle width direction. However, the footboard 36 may not have a flat shape. For example, a center tunnel portion having a shape projecting upward and extending in the front-rear direction may be provided in the center of the footboard 36.

The power unit 8 is disposed below the seat 6. The power unit 8 is swingably supported by the vehicle body frame 2. The power unit 8 rotatably supports the rear wheel 7. The rear wheel 7 is supported by the vehicle body frame 2 via a rear suspension 28. The power unit 8 includes an engine 26 and a transmission 27.

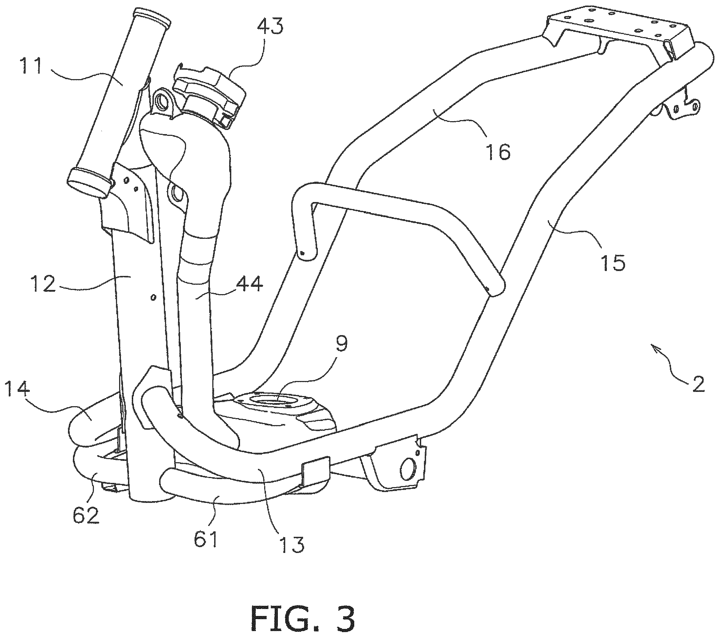

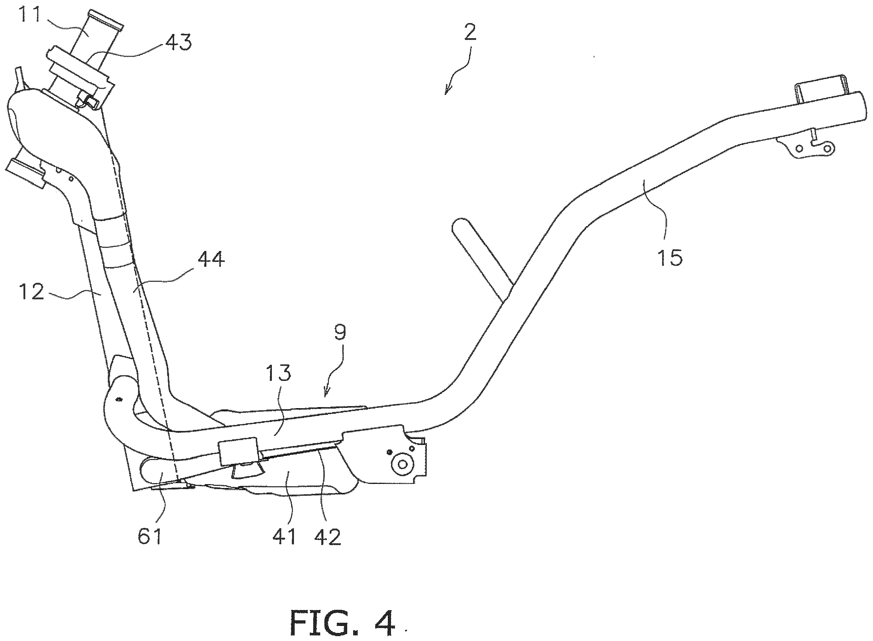

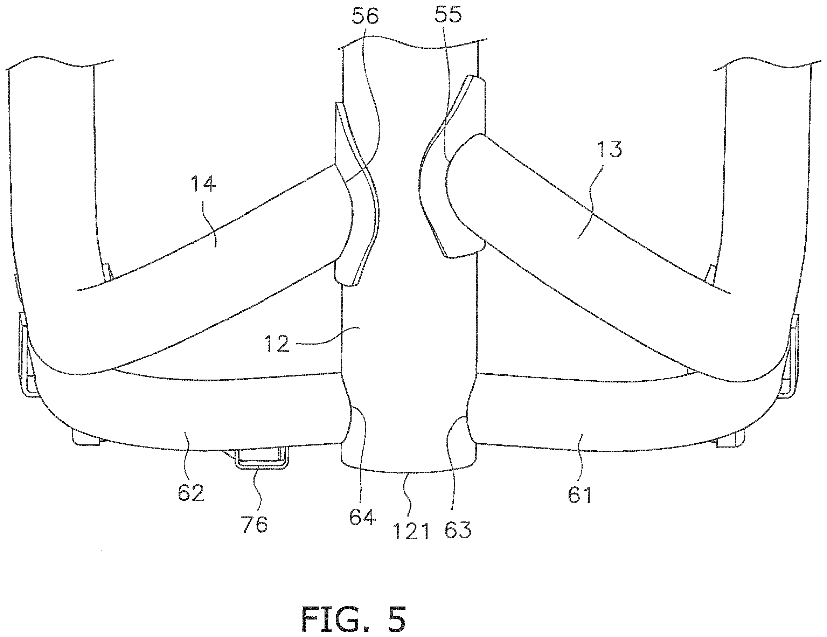

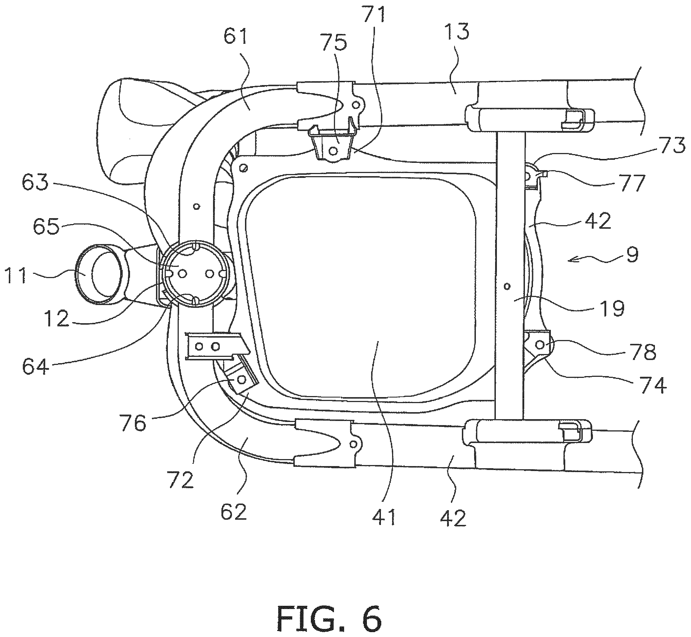

Next, configurations of the vehicle body frame 2 and the fuel tank 9 will be described. FIG. 3 is a perspective view of the vehicle body frame 2 and the fuel tank 9. FIG. 4 is a side view of the vehicle body frame 2 and the fuel tank 9. FIG. 5 is an enlarged front view of the vehicle body frame 2. FIG. 6 is an enlarged bottom view of the vehicle body frame 2 and the fuel tank 9.

The vehicle body frame 2 includes a first side frame 61 and a second side frame 62. The first side frame 61 extends leftward and rearward from the down frame 12. The first side frame 61 has a shape curved rearward. The second side frame 62 extends from the down frame 12 to rightward and rearward, and has a shape curved rearward. The first side frame 61 and the second side frame 62 have a tubular shape. The first side frame 61 and the second side frame 62 are separate from each other.

The first side frame 61 is disposed below the first lower frame 13. The first side frame 61 is connected to the down frame 12 and the first lower frame 13. The first side frame 61 is connected to the down frame 12 at a position lower than the first lower frame 13. The second side frame 62 is disposed below the second lower frame 14. The second side frame 62 is connected to the down frame 12 and the second lower frame 14. The second side frame 62 is connected to the down frame 12 at a position lower than the second lower frame 14.

As shown in FIG. 5, the first side frame 61 includes a first connection end 63 connected to the down frame 12. The second side frame 62 includes a second connection end 64 connected to the down frame 12. The first connection end 63 and the second connection end 64 are fixed to the down frame 12 by welding. The first connection end 63 is located below a connection end 55 of the first lower frame 13. The connection end 55 is connected to the down frame 12. The first connection end 63 is disposed closer to a lower end 121 of the down frame 12 than the connection end 55 of the first lower frame 13. The second connection end 64 is located below a connection end 56 of the second lower frame 14. The connection end 56 is connected to the down frame 12. The second connection end 64 is disposed closer to the lower end 121 of the down frame 12 than the connection end 56 of the second lower frame 14. The first connection end 63 is disposed at the same height as the second connection end 64. The first connection end 63 overlaps the second connection end 64 in the vehicle side view. In the vehicle side view, the first connection end 63 and the second connection end 64 are concentrically arranged.

At least a portion of the fuel tank 9 is disposed between the first lower frame 13 and the second lower frame 14 in the left-right direction of the vehicle. At least a portion of the fuel tank 9 is disposed between the first side frame 61 and the second side frame 62. At least a portion of the fuel tank 9 overlaps the first side frame 61 and the second side frame 62 in a vehicle side view. The fuel tank 9 includes a tank body 41 and a flange portion 42. The tank body 41 internally has a space for storing fuel. The flange portion 42 protrudes from the tank body 41 in the front, rear, left, and right.

As shown in FIG. 6, the fuel tank 9 includes a plurality of mounting portions 71 to 74 for attaching the fuel tank 9 to the vehicle body frame 2. The plurality of mounting portions 71 to 74 are provided on the flange portion 42. Each of the plurality of mounting portions 71 to 74 includes a hole, and the mounting portion 71 to 74 is mounted to the vehicle body frame 2 by inserting a fixing member such as a bolt into the hole. Specifically, the fuel tank 9 includes a first mounting portion 71, a second mounting portion 72, a third mounting portion 73, and a fourth mounting portion 74.

A first bracket 75 is attached to the first lower frame 13. The first mounting portion 71 is attached to the first lower frame 13 via the first bracket 75. A second bracket 76 is attached to the second side frame 62. The second mounting portion 72 is attached to the second side frame 62 via the second bracket 76. The third mounting portion 73 and the fourth mounting portion 74 are disposed behind the tank body 41. As shown in FIG. 2, the vehicle body frame 2 includes a cross member 19. The cross member 19 extends in the vehicle width direction, and is connected to the first lower frame 13 and the second lower frame 14. A third bracket 77 and a fourth bracket 78 are attached to the cross member 19. The third mounting portion 73 is attached to the cross member 19 via the third bracket 77. The fourth mounting portion 74 is attached to the cross member 19 via the fourth bracket 78.

As shown in FIGS. 3 and 4, the straddled vehicle 1 includes a filler port 43 and a fuel pipe 44. As shown in FIG. 4, the filler port 43 is disposed on the lateral side of the head pipe 11. The filler port 43 overlaps the head pipe 11 in the vehicle side view. As shown in FIG. 1, the filler port 43 is disposed on the leg shield 35. The fuel pipe 44 connects the filler port 43 and the fuel tank 9. At least a portion of the fuel pipe 44 is disposed behind the front wheel 5 in the vehicle side view. At least a portion of the fuel pipe 44 is disposed between the mud cover 39 and the leg shield 35 shown in FIG 1. The fuel pipe 44 extends forward and upward from the fuel tank 9 and extends upward along the down frame 12.

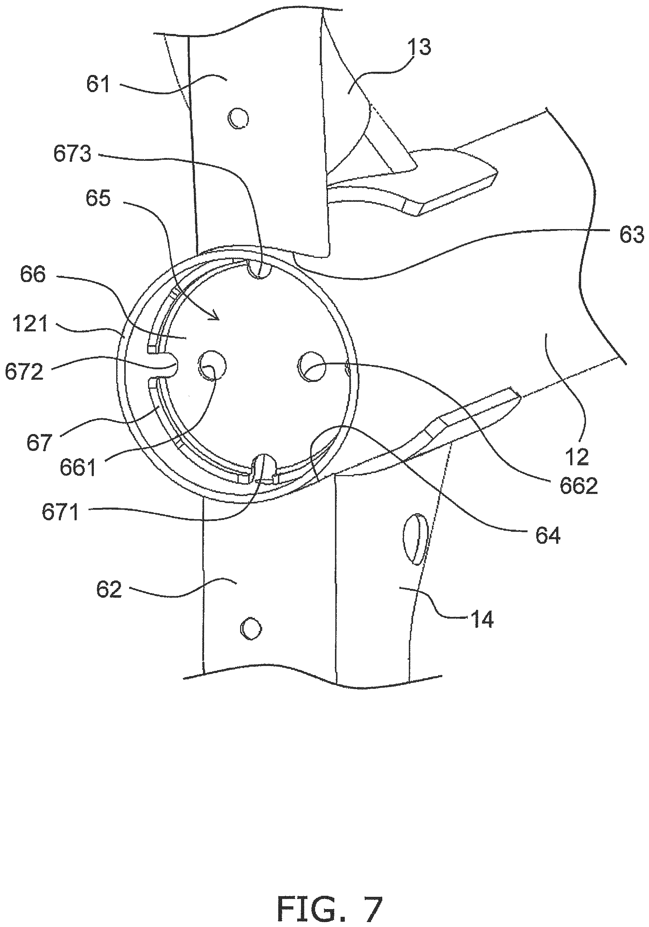

FIG. 7 is an enlarged perspective view of the vehicle body frame 2 as viewed from below. As shown in FIGS. 6 and 7, the vehicle body frame 2 includes a lid member 65. The lid member 65 is disposed in the down frame 12. The lid member 65 is disposed between the first connection end 63 and the second connection end 64 in the vehicle width direction. The lid member 65 is fixed to the down frame 12.

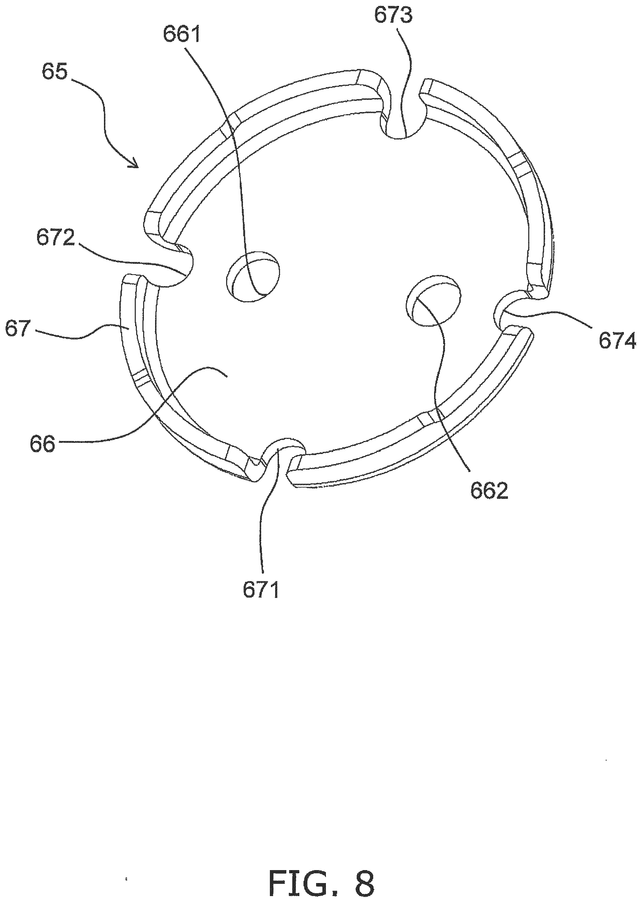

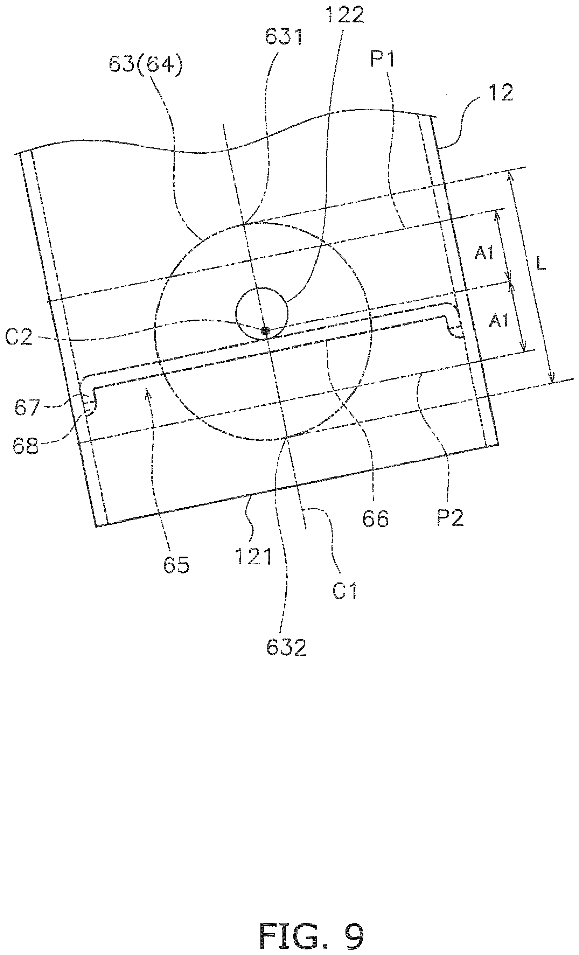

FIG. 8 is a perspective view of the lid member 65. FIG. 9 is an enlarged side view showing the lower portion of the down frame 12. In FIG. 9, the positions of the first connection end 63 and the second connection end 64 are indicated by alternate long and two short dashes lines. As shown in FIG. 8, the lid member 65 has a substantially disc-like shape along the inner peripheral surface of the down frame 12. The lid member 65 includes a lid body 66 and a flange portion 67. The lid body 66 has a disk shape. The flange portion 67 protrudes in the thickness direction of the lid body 66 from the outer periphery of the lid body 66. As shown in FIG. 9, with the lid member 65 disposed in the down frame 12, the flange portion 67 extends from the lid body 66 in the central axial direction (C1) of the down frame 12. The outer peripheral surface of the flange portion 67 is disposed along the inner peripheral surface of the down frame 12. The outer peripheral surface of the flange portion 67 is in contact with the inner peripheral surface of the down frame 12.

The lid member 65 includes a plurality of notches 671-674. The plurality of notches 671-674 are spaced in the circumferential direction of the lid member 65. The notches 671-674 are provided across the flange portion 67 and the lid body 66. The lid member 65 includes a plurality of holes 661 and 662. The plurality of holes 661 and 662 are provided in the lid body 66.

As shown in FIG. 9, in the vehicle side view, the lid member 65 overlaps the first connection end 63 and the second connection end 64. The lid member 65 is disposed between the upper end 631 and the lower end 632 of the first connection end 63 in the central axial direction (C1) of the down frame 12.

In the central axial direction (C1) of the down frame 12, the lid member 65 is disposed within a predetermined distance A1 from the center C2 above and below the center C2. The center C2 is located between the upper end 631 and the lower end 632 of the first connection end 63. That is, an upper position from the center C2 of the first connection end 63 by a predetermined distance A1 in the central axial direction (C1) of the down frame 12 is defined as the upper limit position P1. A lower position from the center C2 of the first connection end 63 by a predetermined distance A1 is defined as the lower limit position P2. The lid member 65 is disposed between the upper limit position P1 and the lower limit position P2 in the central axial direction (C1) of the down frame 12. The predetermined distance A1 is preferably one third of the distance L between the upper end 631 and the lower end 632 of the first connection end 63 in the central axial direction (C1) of the down frame 12.

In the vehicle side view, the lid member 65 is disposed below the center C2 of the first connection end 63 in the central axial direction (C1) of the down frame 12. In the vehicle side view, the lid member 65 is disposed between the center C2 of the first connection end 63 and the lower limit position P2 in the central axial direction (C1) of the down frame 12.

The lid member 65 is fixed to the inner peripheral surface of the down frame 12 by welding. Therefore, the weld bead 68 is provided along the lid member 65 and the inner circumferential surface of the down frame 12. The weld bead 68 is provided along the flange portion 67 of the lid member 65. At least a portion of the weld bead 68 is located between the upper end 631 and the lower end 632 of the first connection end 63. The weld bead 68 is located between the lower end 121 of the down frame 12 and the lid member 65.

The down frame 12 includes a hole 122. The hole 122 penetrates the tube wall of the down frame 12 in the vehicle width direction. The hole 122 is disposed in close proximity to the lid member 65. At least a portion of the hole 122 is located above the lid member 65 in the central axial direction (C1) of the down frame 12. The hole 122 may overlap with the lid member 65 in the vehicle side view .

When welding the lid member 65 to the down frame 12, the first jig is inserted into the hole 122 of the down frame 12, and the second jig is inserted into the hole 662 of the lid member 65 from below the lid member 65. Thereby, the lid member 65 is held in the down frame 12 in a state in which the movement in the up-down direction is restricted. In that state, the lid member 65 is welded to the down frame 12. The hole 122 is disposed at positions overlapping the first side frame 61 or the second side frame 62. Therefore, the first side frame 61 or the second side frame 62 is fixed to the down frame 12 and thereby the hole 122 is covered by the first side frame 61 or the second side frame 62.

In the straddled vehicle 1 according to the present embodiment described above, the first side frame 61 and the second side frame 62 are separate parts from each other. Therefore, the degree of freedom in design can be improved while suppressing an increase in manufacturing cost. Further, the lid member 65 overlaps the first connection end 63 in the vehicle side view . Therefore, the deformation of the down frame 12 due to the force received by the first side frame 61 is suppressed by the lid member 65. Thereby, the rigidity of the vehicle body frame 2 can be improved. Furthermore, since the lid member 65 is disposed in the down frame 12, the upsizing of the vehicle body frame 2 can be suppressed.

The lid member 65 overlaps the first connection end 63 and the second connection end 64 in the vehicle side view . Therefore, the deformation of the down frame 12 due to the force received by the first side frame 61 and the deformation of the down frame 12 due to the force received by the second side frame 62 are suppressed by the lid member 65. Thereby, the rigidity of the vehicle body frame 2 can be further improved.

The lid member 65 is disposed between the first connection end 63 and the second connection end 64 in the vehicle width direction. Therefore, the deformation of the down frame 12 due to the force received by the first side frame 61 and the deformation of the down frame 12 due to the force received by the second side frame 62 are suppressed by the lid member 65. Thereby, the rigidity of the vehicle body frame 2 can be further improved.

The lid member 65 is disposed between the upper end 631 and the lower end 632 of the first connection end 63 in the central axial direction (C1) of the down frame 12. Therefore, the deformation of the down frame 12 due to the force received by the first side frame 61 is suppressed by the lid member 65. Thereby, the rigidity of the vehicle body frame 2 can be improved.

In the central axial direction (C1) of the down frame 12, the lid member 65 is disposed within a predetermined distance A1 from the center C2 between the upper end 631 and the lower end 632 of the first connection end 63 respectively upward and downward. It is arranged. Therefore, the deformation of the down frame 12 due to the force received by the first side frame 61 is more effectively suppressed by the lid member 65. Thereby, the rigidity of the vehicle body frame 2 can be improved.

At least a portion of the weld bead 68 securing the lid member 65 to the down frame 12 is located between the upper end 631 and the lower end 632 of the first connection end 63. Therefore, the lid member 65 is disposed at a position apart from the upper end 631 or the lower end 632 of the first connection end 63 between the upper end 631 and the lower end 632 of the first connection end 63. Therefore, the deformation of the down frame 12 due to the force received by the first side frame 61 is more effectively suppressed by the lid member 65. Thereby, the rigidity of the vehicle body frame 2 can be improved.

The weld bead 68 is located between the lower end 121 of the down frame 12 and the lid member 65. Therefore, since the lid member 65 can be welded from the lower end 121 of the down frame 12, manufacture is easy.

The first connection end 63 overlaps at least a portion of the second connection end 64 in the vehicle side view . Therefore, a large space behind the left and right side frames 61 and 62 can be secured.

In the vehicle side view, the first connection end 63 and the second connection end 64 are concentrically arranged. Therefore, a large space behind the left and right side frames 61 and 62 can be secured.

At least a portion of the fuel tank 9 is disposed between the first side frame 61 and the second side frame 62. Therefore, a large space for disposing the fuel tank 9 behind the left and right side frames 61 and 62 can be secured.

The straddled vehicle 1 according to the present teaching is not limited to a scooter type vehicle, and may be another type of straddled vehicle. The number of front wheels is not limited to one, and may be two or more. The number of rear wheels is not limited to one, and may be two or more.

The shape or arrangement of the fuel tank 9, the fuel pipe 44, or the filler port 43 may be changed.

The shape or arrangement of the first side frame 61 or the second side frame 62 may be changed. The first side frame 61 and the second side frame 62 may be disposed on the left and right opposite to the above embodiment. The first side frame 61 and the second side frame 62 may be left-right asymmetric. For example, the first side frame 61 and the second side frame 62 may be disposed at different heights.

The shape or arrangement of the first connection end 63 and the second connection end 64 may be changed. The center C2 of the first connection end 63 and the center of the second connection end 64 may be offset from each other. The first connection end 63 and the second connection end 64 may be disposed at positions not overlapping each other.

The shape or arrangement of the lid member 65 may be changed. The lid member 65 may overlap only with the first connection end 63 and may not overlap with the second connection end 64. The predetermined distance A1 is not limited to only one third of the distance L between the upper end 631 and the lower end 632 of the first connection end 63, and may be another value. The predetermined distance A1 may be smaller than one third of the distance L between the upper end 631 and the lower end 632 of the first connection end 63.

The number of holes in the lid member 65 may be less than two or more than two. Alternatively, the hole of the lid member 65 may be omitted. The number of notches in the lid member 65 may be at least four or more than four. Alternatively, the notch of the lid member 65 may be omitted. The lid member 65 is not limited to a disc shape, and may have another shape. The shape of the flange portion 67 may be changed. Alternatively, the flange portion 67 may be omitted.

## Claims

1. A straddled vehicle comprising:
a head pipe (11);
a down frame (12) extending downward from the head pipe (11) and having a tubular shape;
a first lower frame (13), a second lower frame (14), a first rear frame (15), and a
second rear frame (16), wherein the head pipe (11) is inclined rearward and upward in a vehicle side view, the first lower frame (13) and the second lower frame (14) are connected to a lower portion of the down frame (12), the first lower frame (13) extends leftward and rearward from the down frame (12), the second lower frame (14) extends rightward and rearward from the down frame (12), the first rear frame (15) extends rearward and upward from the first lower frame (13), the second rear frame (16) extends rearward and upward from the second lower frame (14), the first lower frame (13), the second lower frame (14), the first rear frame (15), and the second rear frame (16) each have a tubular shape;
a lid member (65) disposed in the down frame (12) and fixed to the down frame (12),
**characterized by**
a first side frame (61) extending rearward and to one of left and right from the down frame (12);
a second side frame (62) extending rearward and to the other of the left and right from the down frame (12); wherein
the first side frame (61) and the second side frame (62) are separate parts from each other,
the first side frame (61) includes a first connection end (63) connected to the down frame (12),
the second side frame (62) includes a second connection end (64) connected to the down frame (12),
the first side frame (61) is disposed below the first lower frame (13), the first side frame (61) is connected to the down frame (12) and the first lower frame (13), the first side frame (61) is connected to the down frame (12) at a position lower than the first lower frame (13), the second side frame (62) is disposed below the second lower frame (14), the second side frame (62) is connected to the down frame (12) and the second lower frame (14), the second side frame (62) is connected to the down frame (12) at a position lower than the second lower frame (14), and
in the vehicle side view, the lid member (65) overlaps with the first connection end (63)
of the first side frame (61).

2. The straddled vehicle according to claim 1, **characterized in that** in the vehicle side view, the lid member (65) overlaps the first connection end (63) and the second connection end (64).

3. The straddled vehicle according to claim 1 or 2, **characterized in that** the lid member (65) is disposed between the first connection end (63) and the second connection end (64) in a vehicle width direction.

4. The straddled vehicle according to any one of claims 1 to 3, **characterized in that** the lid member (65) is disposed between an upper end (631) and a lower end (632) of the first connection end (63) in a central axial direction (C1) of the down frame (12).

5. The straddled vehicle according to claim 4, **characterized in that** in the central axial direction (C1) of the down frame (12), the lid member (65) is disposed within a predetermined distance (A1) from a center (C2) between the upper end (631) and the lower end (632) of the first connection end (63) respectively upward and downward, the predetermined distance (A1) is equal to or less than one third of a distance (L) between the upper end (631) and the lower end (632) of the first connection end (63).

6. The straddled vehicle according to claim 4 or 5, **characterized in that** the lid member (65) is fixed to the down frame (12) by welding,
at least a portion of a weld bead (68) securing the lid member (65) to the down frame (12) is located between the upper end (631) and the lower end (632) of the first connection end (63).

7. The straddled vehicle according to claim 6, **characterized in that** the weld bead (68) is located between a lower end (121) of the down frame (12) and the lid member (65).

8. The straddled vehicle according to any one of claims 1 to 7, **characterized in that** in the vehicle side view, the first connection end (63) overlaps with at least a portion of the second connection end (64).

9. The straddled vehicle according to any one of claims 1 to 8, **characterized in that** in the vehicle side view, the first connection end (63) and the second connection end (64) are concentrically disposed.

10. The straddled vehicle according to any one of claims 1 to 9, **characterized by** a fuel tank (9), wherein at least a portion of the fuel tank (9) is disposed between the first side frame (61) and the second side frame (62).

## Patentansprüche

1. Ein Spreiz-Sitz-Fahrzeug, das umfasst:
ein Kopf-Rohr (11);
einen Unter-Rahmen (12), der sich von dem Kopf-Rohr (11) nach unten erstreckt und
eine rohrförmige Form hat;
einen ersten unteren Rahmen (13), einen zweiten unteren Rahmen (14), einen ersten hinteren Rahmen (15) und einen zweiten hinteren Rahmen (16), wobei das Kopf-Rohr (11) nach hinten und oben geneigt ist, in einer Fahrzeug-Seiten-Ansicht, der erste untere Rahmen (13) und der zweite untere Rahmen (14) mit einem unteren Abschnitt des Unter-Rahmens (12) verbunden sind, der erste untere Rahmen (13) sich von dem Unter-Rahmen (12) nach links und hinten erstreckt, der zweite untere Rahmen (14) sich von dem Unter-Rahmen (12) nach rechts und nach hinten erstreckt, der erste hintere Rahmen (15) sich von dem ersten unteren Rahmen (13) nach hinten und nach oben erstreckt, der zweite hintere Rahmen (16) sich von dem zweiten unteren Rahmen (14) nach hinten und nach oben erstreckt, der erste untere Rahmen (13), der zweite untere Rahmen (14), der erste hintere Rahmen (15) und der zweite hintere Rahmen (16) jeweils eine rohrförmige Form aufweisen;
ein Deckel-Element (65), das in dem Unter-Rahmen (12) angeordnet und an dem Unter-Rahmen (12) befestigt ist,
**gekennzeichnet durch**
einen ersten Seiten-Rahmen (61), der sich vom Unter-Rahmen (12) nach hinten und
entweder zur linken Seite oder zur rechten Seite erstreckt;
einen zweiten Seiten-Rahmen (62), der sich von dem Unter-Rahmen (12) nach hinten und zur anderen Seite erstreckt; wobei
der erste Seiten-Rahmen (61) und der zweite Seiten-Rahmen (62) voneinander getrennte Teile sind,
der erste Seiten-Rahmen (61) ein erstes Verbindungs-Ende (63) beinhaltet, das mit dem Unter-Rahmen (12) verbunden ist,
der zweite Seiten-Rahmen (62) ein zweites Verbindungs-Ende (64) beinhaltet, das mit dem Unter-Rahmen (12) verbunden ist,
der erste Seiten-Rahmen (61) unterhalb des ersten unteren Rahmens (13) angeordnet ist, der erste Seiten-Rahmen (61) mit dem Unter-Rahmen (12) und dem ersten unteren Rahmen (13) verbunden ist, der erste Seiten-Rahmen (61) mit dem Unter-Rahmen (12) an einer Position unterhalb des ersten unteren Rahmens (13) verbunden ist, der zweite Seiten-Rahmen (62) unterhalb des zweiten unteren Rahmens (14) angeordnet ist, der zweite Seiten-Rahmen (62) mit dem Unter-Rahmen (12) und dem zweiten unteren Rahmen (14) verbunden ist, der zweite Seiten-Rahmen (62) mit dem Unter-Rahmen (12) an einer Position unterhalb des zweiten unteren Rahmens (14) verbunden ist, und
in der Fahrzeug-Seiten-Ansicht, das Deckel-Element (65) das erste Verbindungs-Ende (63) des ersten Seiten-Rahmens (61) überlappt.

2. Das Spreiz-Sitz-Fahrzeug gemäß Anspruch 1, **dadurch gekennzeichnet, dass** in der Fahrzeug-Seiten-Ansicht, das Deckel-Element (65) das erste Verbindungs-Ende (63) und das zweite Verbindungs-Ende (64) überlappt.

3. Das Spreiz-Sitz-Fahrzeug gemäß Anspruch 1 oder 2, **dadurch gekennzeichnet, dass** das Deckel-Element (65) zwischen dem ersten Verbindungs-Ende (63) und dem zweiten Verbindungs-Ende (64) angeordnet ist, in einer Fahrzeug-BreitenRichtung.

4. Das Spreiz-Sitz-Fahrzeug nach einem der Ansprüche 1 bis 3, **dadurch gekennzeichnet, dass** das Deckel-Element (65) zwischen einem oberen Ende (631) und einem unteren Ende (632) des ersten Verbindungs-Endes (63) in einer Zentral-Axial-Richtung (C1) des Unter-Rahmens (12) angeordnet ist.

5. Das Spreiz-Sitz-Fahrzeug gemäß Anspruch 4, **dadurch gekennzeichnet, dass** in der Zentral-Axial-Richtung (C1) des Unter-Rahmens (12) das Deckel-Element (65) innerhalb eines vorbestimmten Abstands (A1) von einer Mitte (C2) zwischen dem oberen Ende (631) und dem unteren Ende (632) des ersten Verbindungs-Endes (63) jeweils nach oben und nach unten angeordnet ist,
der vorbestimmte Abstand (A1) gleich oder kleiner als ein Drittel eines Abstandes (L) zwischen dem oberen Ende (631) und dem unteren Ende (632) des ersten Verbindungs-Endes (63) ist.

6. Das Spreiz-Sitz-Fahrzeug gemäß Anspruch 4 oder 5, **dadurch gekennzeichnet, dass** das Deckel-Element (65) durch Schweißen am Unter-Rahmen (12) befestigt ist, zumindest ein Teil einer Schweißraupe (68), die das Deckel-Element (65) an dem Unter-Rahmen (12) befestigt, zwischen dem oberen Ende (631) und dem unteren Ende (632) des ersten Verbindungs-Endes (63) angeordnet ist.

7. Das Spreiz-Sitz-Fahrzeug gemäß Anspruch 6, **dadurch gekennzeichnet, dass** sich die Schweißraupe (68) zwischen einem unteren Ende (121) des Unter-Rahmens (12) und dem Deckel-Element (65) angeordnet ist.

8. Das Spreiz-Sitz-Fahrzeug nach einem der Ansprüche 1 bis 7, **dadurch gekennzeichnet, dass** in der Fahrzeug-Seiten-Ansicht, das erste Verbindungs-Ende (63) mit zumindest einem Teil des zweiten Verbindungs-Endes (64) überlappt.

9. Das Spreiz-Sitz-Fahrzeug nach einem der Ansprüche 1 bis 8, **dadurch gekennzeichnet, dass** in der Fahrzeug-Seiten-Ansicht, das erste Verbindungs-Ende (63) und das zweite Verbindungs-Ende (64) konzentrisch angeordnet sind.

10. Das Spreiz-Sitz-Fahrzeug nach einem der Ansprüche 1 bis 9, **gekennzeichnet durch** einen Kraftstoff-Tank (9), wobei zumindest ein Teil des Kraftstoff-Tanks (9) zwischen dem ersten Seiten-Rahmen (61) und dem zweiten Seiten-Rahmen (62) angeordnet ist.

## Revendications

1. Véhicule à enfourcher comprenant :
un tube de tête (11) ;
un châssis descendant (12) qui s'étend vers le bas depuis le tube de tête (11) et présentant une forme tubulaire ;
un premier châssis inférieur (13), un deuxième châssis inférieur (14), un premier châssis arrière (15) et un deuxième châssis arrière (16), dans lequel le tube de tête (11) est incliné vers l'arrière et vers le haut dans une vue latérale du véhicule, le premier châssis inférieur (13) et le deuxième châssis inférieur (14) sont connectés à une portion inférieure du châssis descendant (12), le premier châssis inférieur (13) s'étend vers la gauche et vers l'arrière depuis le châssis descendant (12), le deuxième châssis inférieur (14) s'étend vers la droite et vers l'arrière depuis le châssis descendant (12), le premier châssis arrière (15) s'étend vers l'arrière et vers le haut depuis le premier châssis inférieur (13), le deuxième châssis arrière (16) s'étend vers l'arrière et vers le haut depuis le deuxième châssis inférieur (14), le premier châssis inférieur (13), le deuxième châssis inférieur (14), le premier châssis arrière (15) et le deuxième châssis arrière (16) présentent chacun une forme tubulaire ;
un élément de couvercle (65) disposé dans le châssis descendant (12) et fixé sur le châssis descendant (12),
**caractérisé par**
un premier châssis latéral (61) qui s'étend vers l'arrière et soit vers la gauche, soit vers la droite depuis le châssis descendant (12) ;
un deuxième châssis latéral (62) qui s'étend vers l'arrière et vers l'autre côté gauche ou droit depuis le châssis descendant (12) ; dans lequel
le premier châssis latéral (61) et le deuxième châssis latéral (62) sont des parties séparées l'une de l'autre,
le premier châssis latéral (61) comprend une première extrémité de connexion (63) connectée au châssis descendant (12),
le deuxième châssis latéral (62) comprend une deuxième extrémité de connexion (64) connectée au châssis descendant (12),
le premier châssis latéral (61) est disposé sous le premier châssis inférieur (13), le premier châssis latéral (61) est connecté au châssis descendant (12) et au premier châssis inférieur (13), le premier châssis latéral (61) est connecté au châssis descendant (12) à une position inférieure à celle du premier châssis inférieur (13), le deuxième châssis latéral (62) est disposé sous le deuxième châssis inférieur (14), le deuxième châssis latéral (62) est connecté au châssis descendant (12) et au deuxième châssis inférieur (14), le deuxième châssis latéral (62) est connecté au châssis descendant (12) à une position inférieure à celle du deuxième châssis inférieur (14), et en vue latérale du véhicule, l'élément de couvercle (65) chevauche la première extrémité de connexion (63) du premier châssis latéral (61).

2. Véhicule à enfourcher selon la revendication 1, **caractérisé en ce qu'**en vue latérale du véhicule, l'élément de couvercle (65) chevauche la première extrémité de connexion (63) et la deuxième extrémité de connexion (64).

3. Véhicule à enfourcher selon la revendication 1 ou 2, **caractérisé en ce que** l'élément de couvercle (65) est disposé entre la première extrémité de connexion (63) et la deuxième extrémité de connexion (64) en direction de la largeur du véhicule.

4. Véhicule à enfourcher selon l'une quelconque des revendications 1 à 3, **caractérisé en ce que** l'élément de couvercle (65) est disposé entre une extrémité supérieure (631) et une extrémité inférieure (632) de la première extrémité de connexion (63) dans une direction axiale centrale (C1) du châssis descendant (12).

5. Véhicule à enfourcher selon la revendication 4, **caractérisé en ce qu'**en direction axiale centrale (C1) du châssis descendant (12), l'élément de couvercle (65) est disposé à moins d'une distance prédéterminée (A1) d'un centre (C2) entre l'extrémité supérieure (631) et l'extrémité inférieure (632) de la première extrémité de connexion (63) respectivement vers le haut et vers le bas, et la distance prédéterminée (A1) est inférieure ou égale à un tiers de la distance (L) entre l'extrémité supérieure (631) et l'extrémité inférieure (632) de la première extrémité de connexion (63).

6. Véhicule à enfourcher selon la revendication 4 ou 5, **caractérisé en ce que** l'élément de couvercle (65) est fixé par soudage au châssis descendant (12), et
au moins une portion d'un cordon de soudure (68) qui fixe l'élément de couvercle (65) au châssis descendant (12) est située entre l'extrémité supérieure (631) et l'extrémité inférieure (632) de la première extrémité de connexion (63).

7. Véhicule à enfourcher selon la revendication 6, **caractérisé en ce que** le cordon de soudure (68) est situé entre une extrémité inférieure (121) du châssis descendant (12) et l'élément de couvercle (65).

8. Véhicule à enfourcher selon l'une quelconque des revendications 1 à 7, **caractérisé en ce qu'**en vue latérale du véhicule, la première extrémité de connexion (63) chevauche au moins une portion de la deuxième extrémité de connexion (64).

9. Véhicule à enfourcher selon l'une quelconque des revendications 1 à 8, **caractérisé en ce qu'**en vue latérale du véhicule, la première extrémité de connexion (63) et la deuxième extrémité de connexion (64) sont disposées concentriquement.

10. Véhicule à enfourcher selon l'une quelconque des revendications 1 à 9, **caractérisé par** un réservoir de carburant (9), dans lequel au moins une portion du réservoir de carburant (9) est disposée entre le premier châssis latéral (61) et le deuxième châssis latéral (62).
